# EUROPEAN PATENT APPLICATION

(11) **EP 1 112 781 A2**
(43) Date of publication of application: **04.07.2001**
(21) Application number: 00110539.4
(22) Date of filing: 17.05.2000
(51) Int. Cl.: B05D 5/06, C09D 5/36

(54) **A method of painting plastics elements, and paint for plastics elements utilised in this method**

(30) Priority: 30.12.1999 IT TO991181
(71) Applicant: FIAT AUTO S.p.A., 10135 Torino (IT)
(72) Inventor: Beltramo Carlo, 10136 Torino (IT); Costa Bruno, 10029 Villastellone (IT)
(74) Representative: Eccetto, Mauro

(57) **Abstract**

A method of painting to confer on elements of plastics material a metallic or pearlescent finish; the method comprising the steps of moulding and preparation of the element to be painted in such a way as to give the element itself a basic colouration, and depositing on the element a single layer of transparent material to give the metallic or pearlised finish; the transparent material being prepared before the deposition step by adding metallic or pearlescent additive elements to a base transparent material.

## Description

The present invention relates to a method of painting plastics elements, in particular for external panels and bumpers of motor vehicles to which the following specification will make explicit reference without loss of generality thereby.

In the motor vehicle field, essentially for aesthetic reasons, there is felt the need to have visible surfaces of plastics panels of a particular colour and finish. Normally suitable paints are used for plastics material able to confer a colour and finish similar to that of the bodywork of the associated motor vehicle which is made of metal.

In order to obtain a metallised finish on the panels, after having formed the panel by pressing, a de-greasing operation is performed on the surface which is to be painted, then a first layer of paint, commonly called a "primer" is applied to this surface, which performs an anchoring function to allow, subsequently, the secure bonding of a second layer of covering paint when it is applied. The paint of this second layer comprises a base substance in which are dispersed the pigments able to give the painted surface the required colour, and the additive elements which give the painted surface a metallic finish.

Thereafter a drying operation at ambient temperature is performed to fix the second layer of paint, then a third layer of transparent varnish is applied necessary to protect the second paint layer, and finally a final baking or stoving operation is performed in order definitely to fix the applied layers.

The known painting methods described above for plastics elements are not very satisfactory in that they involve relatively long times and high costs because of the large number of operations to be performed in order to obtain the required metallic finish. In particular, the known methods described above involve the preparation of three different paints in respective separate installations, three separate operations to apply the respective layers of paint as well as the drying and stoving operations.

The object of the present invention is that of providing a method of painting suitable for plastics elements which makes it possible to resolve the above-explained problems in a simple and economic manner and, in particular, make it possible to obtain a metallic or pearlescent finish for the painted surface.

According to the present invention there is provided a method of painting give a to confer on plastics element materials a metallic or pearlescent finish; the method comprising the steps of preparation of the element to be painted in such a way as to give it a base colour, and deposition on the said element of a layer of transparent material; characterised in that the metallic or pearlescent finish of the said element is obtained by depositing a single layer of the said transparent material; and in that it comprises the further step, before the said deposition step, of preparing the said transparent material by adding to a basic transparent material at least metallic or pearlescent additive elements.

The present invention also relates to a paint for elements of plastics material.

According to the present invention there is provided a paint for elements of plastics material, characterised in that it is substantially transparent and includes metallic or pearlescent additive elements acting to confer a metallic or pearlescent finish to the surface of an element of plastics material pigmented throughout.

For a better understanding of the present invention a preferred embodiment will now be described by way of non-limitative example.

In particular, the following discussion makes reference to an element of polypropylene for motor vehicles, and preferably to a bumper of polypropylene.

The bumper is "coloured throughout" that is to say formed by moulding polypropylene with pigments which confer on the polypropylene mass itself a uniform pastel base tint, preferably the base colour of the associated motor vehicle.

The surface delimiting the bumper is subjected to a painting process for the purpose of conferring on the surface itself a metallic or pearlescent finish and to protect the bumper from abrasion against external agents and ageing.

This painting process provides a preliminary de-greasing of the external surface to be painted, and the application, directly on this surface, of a single layer of substantially transparent paint of metallic or pearlescent effect, that is to say including metallic or pearlescent additive elements which can confer on the painted outer surface a metallic finish. In particular, such metallic additive elements comprise particles of metal material such as, for example, copper or aluminium, whilst the pearlescent additive elements comprise particles of mica.

After application of the layer of paint the bumper is subjected to a final stoving operation comprising, in particular, heating to a temperature of 80°c for a duration of about 30 minutes.

The paint is prepared by mixing the pearlescent or metallic additive elements to the following components. The paint comprises a bonding component in the particular described embodiment of chlorinated polyolefin or a substance derived from a chlorinated polyolefin, to allow the layer of paint to bond directly onto the surface of the bumper of polypropylene. The paint also comprises a vehicle of additive elements and defined pigments in the particular example described of hydroxylated acrylic resin, and a catalyst for the defined products, in the particular example described of aliphatic isocyanate.

The paint further includes protective components able to absorb part of the ultra violet radiation incident on the painted surface for the purpose of stabilising the paint itself against ageing caused by ultra-violet rays.

In a variant, the paint further includes pigments which allow variation of the tone of the basic colour of the surface to be painted in such a way as to be able to obtain bumpers of different final tone and shading colour in dependence on the type and percentage of pigment present in the paint starting from bumpers having the same base tint.

In a further variant the paint further comprises additive embossing elements which are able to confer a rough finish to the painted surface, and comprise, in the particular described example, particles or macromolecules of polyurethane or polyamide.

From the above it is evident that the use of a transparent paint including metallic or pearlescent additive elements makes it possible to obtain surfaces having a metallic or pearlescent finish by means of a smaller number of operations than those used in known solutions and, therefore, involves relatively shorter times and lower costs.

The fact that the transparent paint is applied directly to a bumper made from a mass of previously coloured, polypropylene makes it possible, thanks to the bonding component, to avoid the use of a layer of suitable paint for bonding, to apply a single layer of paint to the outer surface of the bumper, and to effect a single stoving operation of the bumpers themselves rather than applying three layers of different paints one after the other and effecting drying and stoving operations as in known solutions.

The above-described method of painting also makes it possible to obtain other particular effects on the painted surface by utilising suitable additive elements in the transparent paint; for example it is possible to obtain very varied toning and shading of colour starting from the same basic tint, or an embossed roughened finish.

From the above it is evident that the method described can have modifications and variations introduced thereto which do not depart from the protective field of the present invention.

The transparent paint could be different from that described by way of example and, in particular, could include different components from those indicated in order to adapt it to different plastics materials other than polypropylene, such as, for example, ABS.

Moreover, the transparent paint could include different additive elements from aluminium, copper or mica, and other additive elements able to confer particular aspects or finishes to the surface to be painted, or particular protective characteristics to the transparent paint itself.

Moreover, the painting method described can be utilised also for different plastics elements other than bumpers, for example for the casings of the external rear view mirrors.

## Claims

1. A method of painting to confer on plastics material elements a metallic or pearlescent finish; the method comprising the steps of preparation of the element to be painted in such a way as to confer a base colouration to the said element to be painted, and deposition onto the said element of a layer of transparent material; characterised in that the metallic or pearlescent finish of the said element is obtained by depositing a single layer of the said transparent material; and in that it comprises the further phase, before the said deposition phase, of preparing the said transparent material by adding to a transparent base material at least metallic or pearlescent additive elements.

2. A method according to Claim 1, characterised in that the preparation of the said transparent material further comprises the steps of adding pigments to the said base material to vary the tone of the colour of the said prepared element.

3. A method according to Claim 1 or Claim 2, characterised in that the preparation of the said transparent material includes the further step of adding a bonding component to the said base material.

4. A method according to Claim 3, characterised in that the deposition of the said layer of transparent material is effected directly onto the surface of the said prepared element of plastics material.

5. A method according to any preceding claim, characterised in that the preparation of the said transparent material comprises the further step of adding embossing additive elements to the said base material to confer a rough finish to the surface of the said element.

6. A method according to any preceding claim, characterised in that it includes the further step of subjecting the said element to a single stoving operation after deposition of the said layer of transparent material.

7. A paint for elements of plastics material, characterised in that it is substantially transparent and includes additive metallic or pearlescent elements able to confer a metallic or pealescent finish to the surface of an element of self-coloured plastics material.

8. A paint according to Claim 7, characterised in that it comprises a vehicle of additive elements and pigments, a bonding component to allow bonding of the paint directly onto the said surface, and a catalyst of the products.

9. A paint according to Claim 8, characterised in that the said bonding component comprises chlorinated polyolefin.

10. A paint according to Claim 8, characterised in that the said bonding component comprises a substance derived from chlorinated polyolefin.

11. A paint according to Claim 8, characterised in that the said vehicle comprises an hydroxylated acrylic resin.

12. A paint according to Claim 8, characterised in that the said catalyst comprises aliphatic isocyanate.

13. A paint according to any of from Claims 7 to 12, characterised in that it further comprises pigments acting to vary the tone of the colour of the said surface to be painted.

14. A paint according to any of Claims from 7 to 13, characterised in that it further includes embossing additive elements acting to confer a rough finish to the said surface.

15. A paint according to Claim 14, characterised in that the said embossing additive elements comprises particles of polyurethane.

16. A paint according to Claim 14, characterised in that the said embossing additive elements comprise particles of polyamide.

17. A paint according to any of Claims from 7 to 16, characterised in that it further includes components for stabilisation against ultra-violet radiation.

18. A paint according to any of Claims 7 to 17, characterised in that the said metalising additive elements comprise particles of aluminium.

19. A paint according to any of Claims from 7 to 17, characterised in that the said metalising additive elements comprise particles of copper.

20. A paint according to any of Claims from 7 to 17, characterised in that the said pearlescent additive elements comprise particles of mica.
